# EUROPÄISCHE PATENTSCHRIFT

(11) **EP 0 651 149 B1**
(45) Veröffentlichungstag und Bekanntmachung des Hinweises auf die Patenterteilung: **04.02.1998**
(21) Anmeldenummer: 94115850.3
(22) Anmeldetag: 07.10.1994
(51) Int. Cl.: F02D 41/26, F02D 41/14

(54) **Steuerung der Kraftstoffeinspritzmenge in Abhängigkeit vom Luftfluss in die Zylinder**
Controlling the amount of injected fuel depending on the air-flow into the cylinders
Commande du débit de carburant injecté en fonction du flux d'air dans les cylindres

(30) Priorität: 30.10.1993 DE 4337239
(43) Veröffentlichungstag der Anmeldung: 03.05.1995
(73) Patentinhaber: Bayerische Motoren Werke Aktiengesellschaft, 80788 München (DE)
(72) Erfinder: Rose, Axel, D-81379 München (DE); Cosfeld, Ralf, D-80992 München (DE); Thiel, Gerhard, D-80335 München (DE)

(56) Entgegenhaltungen:
- EP-A- 0 525 597
- EP-A- 0 559 098
- DE-A- 4 125 675
- DE-A- 4 143 088
- US-A- 4 738 238
- SAE-PAPER 810494
- 16.ISATA FLORENZ 5/1987,PAPER 87017

## Beschreibung

Die Erfindung bezieht sich auf eine Vorrichtung zur Steuerung der Kraftstoffeinspritzmenge bei Brennkraftmaschinen in Abhängigkeit vom Luftfluß in die Zylinder mit einer Zylinder-Luftflußermittlungseinheit, gemäß Oberbegriff des Anspruchs 1 (vergl. EP-A-559 098).

Darüber hinaus ist eine Vielzahl von Brennkraftmaschinen mit variablen Nockenwellenverstellsystemen bekannt. Bei variablen Nockenwellenverstellsystemen, auch VANOS genannt, wird zumindest eine Nockenwelle gegenüber der Kurbelwelle derart verstellt, daß sich die Ein- und/oder Auslaßventile der Zylinder gegenüber dem oberen Totpunkt der Kurbelwelle verfrüht oder verspätet öffnen. Zur Regelung der variablen Nockenwellenverstellung enthalten die Nockenwellenverstellsysteme Sensoren zur Erfassung eines der Nockenwellenverstellung proportionalen Signals bzw. Meßwertes.

Die variablen Nockenwellenverstellsysteme beeinflussen in Abhängigkeit von der momentanen Nockenwellenverstellung im wesentlichen den Restgasgehalt im Zylinder nach einem Verbrennungstakt. Dieser Restgasgehalt beeinflußt entscheidend die Richtigkeit eines geschätzten Luftflusses in den Zylinder bzw. einer geschätzten Luftmenge im Zylinder.

Es ist Aufgabe der Erfindung, eine Vorrichtung eingangs genannter Art derart zu verbessern, daß keine verfälschte Schätzung des Luftflusses in die Zylinder bzw. der Luftmenge in den Zylindern bei Brennkraftmaschinen mit variablen Nockenwellenverstellsystemen auftritt, um ein abgasoptimales Steuern der Kraftstoffeinspritzmenge zu ermöglichen.

Diese Aufgabe wird durch die kennzeichnenden Merkmale des Patentanspruchs 1 gelöst.
Erfindungsgemäß wird der einer Nockenwellenverstellung proportionale Meßwert über eine Signalleitung vom Nockenwellenverstellsystem zur Zylinder-Luftflußermittlungseinheit übertragen. Aus diesem Signal bzw. Meßwert wird ein Korrekturparameter gebildet. Durch diesen Korrekturparameter ist ein Kennfeld von einer Vielzahl von Kennfeldern, die in der Zylinder-Luftflußermittlungseinheit enthalten sind, ausgewählt. In jedem Kennfeld sind Werte für den Luftfluß in die Zylinder in Abhängigkeit von mindestens einer Betriebsgröße der Brennkraftmaschine, die vorzugsweise unabhängig vom variablen Nockenwellenverstellsystem ist, vorgegeben. Bei einem Nockenwellenverstellsystem zur Verstellung der Einlaß- und der Auslaßnockenwelle sind beispielsweise die der Nockenwellenverstellung proportionalen Meßwerte die Verstellwinkel der Nockenwellen gegenüber der Kurbelwelle oder ist der der Nockenwellenverstellung proportionale Meßwert die sogenannte Ventilüberschneidungsfläche, die auf bekannte Weise ermittelbar ist.
Die Daten der Kennfelder werden vorzugsweise empirisch ermittelt und in einem elektronischen Speicher nichtflüchtig abgespeichert.

Durch diese erfindungsgemäße Vorrichtung ist eine sehr genaue Bestimmung des Luftflusses in die Zylinder möglich, wodurch die ihr zugeordnete Kraftstoffeinspritzmenge zu jeweils optimalen Abgasemissionswerten führt.

Es ist für die Brennkraftmaschine ein Nockenwellenverstellsystem zur Verstellung sowohl der Einlaß- als auch der Auslaßnockenwelle vorgesehen und es wird erfindungsgemäß für beide Nockenwellen je ein der Nockenwellenverstellung proportionales Signal erfaßt, woraus zwei Meßwerte gebildet werden, die anschließend addiert werden. Das Ergebnis der Addition dieser Meßwerte wird als Korrekturparameter zur Auswahl eines Kennfeldes herangezogen. Der Korrekturparameter entspricht also den addierten Verstellwegen jeder Nockenwelle gegenüber dem oberen Totpunkt der Kurbelwelle. Dies ist eine besonders einfache Art und Weise zur Bildung des Korrekturparameters, der in etwa dieselbe Aussagekraft wie z.B. die Ventilüberschneidungsfläche enthält, die jedoch wesentlich weniger aufwendig als die Bildung der Ventilüberschneidungsfläche ist. Der erfindungsgemäß gebildete Korrekturparameter durch die Addition der Verstellwinkel, auch Ventilüberschneidungswinkel genannt, ist proportional zur Ventilüberschneidungsfläche, die wiederum proportional zum Restgasanteil ist. Durch diese erfindungsgemäße Weiterbildung ist eine besonders genaue aber besonders einfache Bestimmung des Luftflusses in die Zylinder möglich.

Eine vorteilhafte Weiterbildung der Erfindung ist der Gegenstand des Patentanspruchs 2.
Erfindungsgemäß werden zur Ermittlung des Luftflusses in die Zylinder Kennfelder vorgesehen, die den jeweiligen Luftfluß in die Zylinder in Abhängigkeit von der Brennkraftmaschine und dem Ansaugtraktdruck vorgeben. Der Ansaugtraktdruck kann gemessen oder berechnet werden. Die Brennkraftmaschinendrehzahl ist eine ohnehin auch für andere Funktionen gemessene Betriebsgröße. Die Brennkraftmaschinendrehzahl und der Ansaugtraktdruck sind die aussagekräftigsten Betriebsgrößen zur Bestimmung des Luftflusses in die Zylinder, da der Ansaugtraktdruck proportional zum Luftfluß durch die Drosselklappe ist, der wiederum im stationärem Betrieb gleich dem Luftfluß in die Zylinder ist.

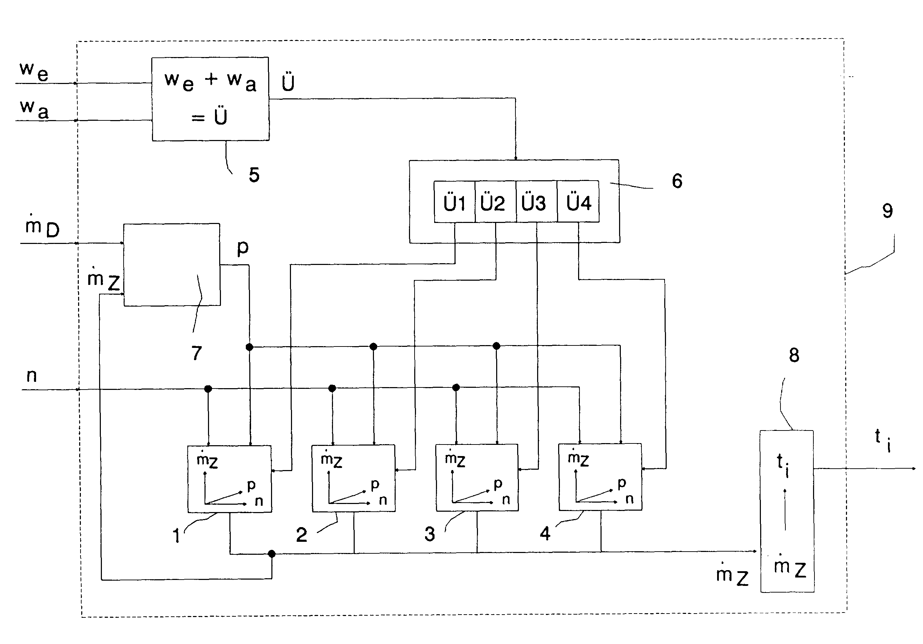

In der Zeichnung ist ein Ausführungsbeispiel der Erfindung dargestellt. Sie zeigt eine erfindungsgemäße Vorrichtung mit einem nockenwellenverstellungsabhängigen Korrekturparameter, durch den vier unterschiedliche Kennfelder auswählbar sind.

In einer elektronischen Zylinder-Luftflußermittlungseinheit 9 sind ein erstes, zweites, drittes und viertes Kennfeld 1, 2, 3 und 4 in nicht-flüchtigen Speichern abgelegt. Von einem hier nicht dargestellten Nockenwellenverstellsystem werden über zwei Signalleitungen der Einlaßnockenwellenverstellwinkel wₑ und der Auslaßnockenwellenverstellwinkel wₐ als jeweils der Nockenwellenverstellung proportionale Meßwerte an die Zylinder-Luftflußermittlungseinheit 9 herangeführt. Diese beiden Meßwerte wₑ, wₐ sind die Eingangssignale einer Additionseinheit 5, in der der Einlaßnockenwellenverstellwinkel wₑ gegenüber dem oberen Totpunkt der Kurbelwelle und der Auslaßnockenwellenverstellwinkel wₐ gegenüber dem oberen Totpunkt der Kurbelwelle addiert werden, wodurch ein Ventilüberschneidungswinkel Ü gebildet wird. Dieser Ventilüberschneidungswinkel Ü ist über eine elektrische Leitung mit der Korrektureinheit 6 verbunden. Die Korrektureinheit 6 teilt den Ventilüberschneidungswinkel Ü, der hier der Korrekturparameter ist, einem von vier Bereichen Ü1, Ü2, Ü3, Ü4 zu. Je ein Bereich der Korrektureinheit 6 ist mit einem Aktivierungseingang eines der Kennfelder 1 bis 4 verbunden.

Darüber hinaus erhält die Zylinder-Luftflußermittlungseinheit 9 als Eingangssignale die Brennkraftmaschinendrehzahl n und den Luftfluß ṁ_{D} durch die Drosselklappe. Ergänzend sei darauf hingewiesen, daß der Luftfluß ṁ_{D} durch die Drosselklappe beispielsweise durch einen Luftmengensensor meßbar oder mittels dem hier nicht dargestellten Drosselklappenwinkel und anderen Betriebsgrößen der Brennkraftmaschine berechenbar ist. Aus dem Luftfluß ṁ_{D} durch die Drosselklappe wird in der Umrechnungseinheit 7 unter Berücksichtigung des zuvor ermittelten, rückgeführten Luftflusses ṁ_{Z} in die Zylinder der Ansaugtraktdruck p ermittelt. Der den Ansaugtraktdruck p ausgebende Ausgang der Umrechnungseinheit 7 ist mit je einem Eingang jedes der Kennfelder 1 bis 4 verbunden. Darüber hinaus ist auch der Eingang zur Erfassung der Brennkraftmaschinendrehzahl n an je einen Eingang der Kennfelder 1 bis 4 angeschlossen. Die Ausgänge der Kennfelder 1 bis 4 sind mit dem Eingang einer Kraftstoffzumessungseinheit 8 verbunden und führen den Wert des aktuell ermittelten Luftflusses ṁ_{Z} in die Zylinder.

Die Kraftstoffzumessungseinheit 8 ordnet dem durch eines der Kennfelder 1 bis 4 aktuell ermittelten Luftfluß ṁ_{Z} in die Zylinder eine Kraftstoffeinspritzmenge tᵢ zu und steuert entsprechend des Wertes tᵢ die hier nicht dargestellten Einspritzventile an. Welches der Kennfelder 1 bis 4 jeweils zur Bestimmung des aktuellen Luftflusses ṁ_{z} in die Zylinder zuständig ist, wird durch die Korrektureinheit 6 bestimmt.

Die Korrektureinheit 6 wählt entsprechend des Ventilüberschneidungswinkels Ü einen der Bereiche Ü1, Ü2, Ü3, Ü4 als Korrekturparameter aus. Der ausgewählte Bereich aktiviert über den Aktivierungseingang der Kennfelder 1 bis 4 eines der vier Kennfelder. Wird beispielsweise ein sehr hoher Ventilüberschneidungswinkel Ü an die Korrektureinheit 6 übertragen, wird beispielsweise der Bereich Ü4 ausgewählt, der über den Aktivierungseingang des Kennfeldes 4 die Bestimmung des Luftflusses ṁ_{Z} in die Zylinder über das Kennfeld 4 auswählt. Gleichzeitig sind die Kennfelder 1 bis 3 inaktiv, da deren Aktivierungseingänge nicht angesteuert werden. Die Ansteuerung der Aktivierungseingänge ist beispielsweise digital möglich, wobei ein Aktivieren einer logischen EINS und ein Nicht-Aktivieren einer logischen NULL entsprechen kann.

Das jeweils aktivierte Kennfeld, z.B. das Kennfeld 4, bestimmt in Abhängigkeit von den aktuell vorliegenden Werten der Brennkraftmaschinendrehzahl n und des Ansaugtraktdruckes p den Luftfluß ṁ_{Z} in die Zylinder. In Abhängigkeit von dem in der Korrektureinheit 6 ausgewähltem Bereich werden für gleiche Werte der Brennkraftmaschinendrehzahl n und des Ansaugtraktdruckes p entsprechend dem erwarteten Restgasanteil, der von dem Ventilüberschneidungswinkel Ü abhängt, unterschiedliche Werte für den Luftfluß ṁ_{Z} in die Zylinder bestimmt. Der Wert des Luftflusses ṁ_{Z} in die Zylinder wird also immer nur von einem der vier Kennfelder 1 bis 4 vorgegeben. Es sei darauf hingewiesen, daß erfahrungsgemäß mit steigendem Ventilüberschneidungswinkel in der Regel auch der Restgasanteil im Zylinder zunimmt.

Darüber hinaus ist beispielsweise auch zur Einsparung von Speicherplatz ein Ausführungsbeispiel möglich, bei dem nur ein normiertes Kennfeld abgelegt ist, das kontinuierlich in Abhängigkeit von dem Korrekturparameter rechnerisch in andere Kennfelder übergeführt wird. Hierdurch wäre eine unendlich große Anzahl von (rechnerischen) Kennfeldern, gebildet aus einem einzigen normierten Grund-Kennfeld, möglich. Die erfindungsgemäße Ausführung ist entsprechend dem gewünschten Aufwand auswählbar. Zur Bestimmung des Luftflusses in die Zylinder ist jedoch auch eine rechnerische Interpolation aus Werten zweier Kennfelder möglich, wenn nur eine begrenzte Anzahl an Kennfeldern abspeicherbar ist.

Dieses erfindungsgemäße Ausführungsbeispiel zeigt eine einfache Vorrichtung mit einem einfachen Verfahren zur VANOS-korrigierten Bestimmung des Luftflusses in die Zylinder. Es sei darauf hingewiesen, daß anstelle des Ventilüberschneidungswinkels beispielsweise auch die genauere aber aufwendiger zu bestimmende Ventilüberschneidungsfläche verwendet werden kann.

## Patentansprüche

1. Vorrichtung in einem Kraftfahrzeug mit einer Brennkraftmaschine zur Steuerung der Kraftstoffeinspritzmenge in Abhängigkeit vom Luftfluß in die Zylinder der Brennkraftmaschine mit einer Zylinder-Luftflußermittlungseinheit (9), die mit einer Signalleitung eines variablen Nockenwellenverstellsystems zur Übertragung eines einer Nockenwellenverstellung proportionalen Meßwertes (wₑ; wₐ) verbunden ist und die mehrere Kennfelder (1, 2, 3, 4) enthält, die jeweils in Abhängigkeit von einem aus diesem Meßwert (wₑ; wₐ) gebildeten Korrekturparameter (Ü; Ü1, Ü2, Ü3, Ü4) auswählbar sind, dadurch gekennzeichnet, daß das Nockenwellenverstellsystem die Einlaß- und die Auslaßnockenwelle verstellt, daß für beide Nockenwellen je ein der Nockenwellenverstellung proportionaler Meßwert (wₑ, wₐ) übertragen wird, daß diese Meßwerte (wₑ; wₐ) addiert werden, und daß der Korrekturparameter (Ü1, Ü2, Ü3, Ü4) zur Auswahl der Kennfelder (1, 2, 3, 4) das Ergebnis dieser Addition (wₑ + wₐ) ist.

2. Vorrichtung nach Patentanspruch 1, dadurch gekennzeichnet, daß die Betriebsgrößen der Brennkraftmaschine in den Kennfeldern (1, 2, 3, 4) zur Ermittlung des Luftflusses (*ṁ*_{Z}) in die Zylinder die Brennkraftmaschinendrehzahl (n) und der Ansaugdruck (p) sind.

## Claims

1. A device in a motor vehicle with an internal combustion engine for the control of the fuel injection quantity as a function of air flow into the cylinders of the internal combustion engine, with a cylinder air flow determination unit (9) which is connected to a signal line of a variable camshaft adjustment system for transmission of a measured value (wₑ; wₐ) proportional to a camshaft adjustment, and containing a plurality of characteristics maps (1, 2, 3, 4) which can each be selected on the basis of a correction parameter (Ü1, Ü2, Ü3, Ü4) formed from this measured value (wₑ; wₐ), **characterised in that** the camshaft adjustment system adjusts the intake and exhaust camshafts, a measured value (wₑ; wₐ) proportional to the camshaft adjustment is transmitted for each of the two camshafts, these measured values (wₑ; wₐ) are added together and that the correction parameter (Ü1, Ü2, Ü3, U4) for selection of the characteristics maps (1, 2, 3, 4) is the result of this addition (wₑ + wₐ).

2. A device according to patent claim 1, **characterised in that** the operating parameters of the internal combustion engine in the characteristics maps (1, 2, 3, 4) to establish the air flow (*m*_{Z}) into the cylinder are the internal combustion engine speed (n) and the intake pressure (p).

## Revendications

1. Dispositif de commande de la quantité de carburant à injecter dans un moteur à combustion interne de véhicule en fonction du débit d'air dans les cylindres du moteur, comprenant une unité (9) déterminant le flux d'air dans les cylindres, reliée par une ligne de transmission de signaux d'un système de commande variable d'arbres à cames pour transmettre une valeur de mesure (wₑ, wₐ) proportionnelle à une commande d'arbres à cames et comportant plusieurs champs de caractéristiques (1, 2, 3, 4) qui se sélectionnent chaque fois en fonction d'un paramètre de correction (U, U1, U2, U3, U4) formé à partir de cette valeur de mesure (wₑ, wₐ),
caractérisé en ce que
le système de commande d'arbres à cames agit sur l'arbre à cames d'admission et l'arbre à cames d'échappement,
- pour les deux arbres à cames on transmet chaque fois une valeur de mesure (wₑ, wₐ) proportionnelle à la commande des arbres à cames,
- on additionne ces valeurs (wₑ, wₐ) et,
- le paramètre de correction (U1, U2, U3, U4) pour sélectionner les champs de caractéristiques (1, 2, 3, 4) est le résultat de cette addition (wₑ = wₐ).

2. Dispositif selon la revendication 1,
caractérisé en ce que
les paramètres de fonctionnement du moteur à combustion interne dans les champs de caractéristiques (1, 2, 3, 4) pour déterminer le flux d'air (ṁ_{Z}) dans les cylindres sont la vitesse de rotation (n) du moteur à combustion interne et la pression d'aspiration (p).
